# EUROPEAN PATENT APPLICATION

(11) **EP 2 887 654 A1**
(43) Date of publication of application: **24.06.2015**
(21) Application number: 12891414.0
(22) Date of filing: 17.08.2012
(51) Int. Cl.: H04N 7/173

(54) **TERMINAL DEVICE, DISPLAY DEVICE, TERMINAL DEVICE LINKING SYSTEM, TERMINAL DEVICE LINKING METHOD, AND NON-TEMPORARY COMPUTER READABLE MEDIUM**

(71) Applicant: NEC CASIO Mobile Communications, Ltd., Kawasaki-shi, Kanagawa 211-8666 (JP)
(72) Inventor: KOSAKA, Daiki, Kawasaki-shi Kanagawa 211-8666 (JP)
(74) Representative: Vossius & Partner Patentanwälte Rechtsanwälte mbB
(86) International application number: PCT/JP2012/005190
(87) International publication number: WO 2014/027382

(57) **Abstract**

A terminal device (mobile phone (200)) is capable of communication with a display device that displays content containing audio and video, and includes a transmitting and receiving unit (208) for transmitting and receiving information to and from the display device, an input unit (207) for accepting setting information indicating an element to be output in conjunction with display of the content, a storage area (206) for storing the setting information accepted by the input unit (207), a control unit (205) for making control to transmit the setting information to the display device and then receive control data for outputting the element indicated by the setting information in conjunction with display of the content from the display device, and an output control unit (211) for outputting the element in conjunction with display of the content by using the control data. The display device generates the control data based on the setting information and transmits it to the terminal device.

## Description

### Technical Field

The present invention relates to a technique that allows a terminal device to display content information which is displayed on a display device in link with the display device.

### Background Art

When several persons are watching a movie or the like on a display device such as a television, a certain person may want to watch it in English language with subtitles, while another person may want to watch it in a different language such as Japanese. Like this case, when several persons watch the same movie at the same time, requirements of the individual persons may differ, such as wanting to view the movie in different types of audio.

However, those requirements cannot be satisfied at the same time in the existing display device. For example, a typical television has one screen that displays a video and outputs one type of audio selected from a plurality audio types. Thus, in order to view a video with subtitles or in another type of audio, it is necessary to prepare a display device or an audio output device externally.

In view of this, a master-slave link type display system that enables viewing a video with a large screen that is placed in a distant position from a user and further allows the user to watch subtitles nearby is proposed in Patent Literature 1, for example.

### Citation List

### Patent Literature

PTL1: Japanese Unexamined Patent Application Publication No. H11-243512

### Summary of Invention

### Technical Problem

However, in the master-slave link type display system disclosed in Patent Literature 1, it is necessary to prepare a dedicated device.

An exemplary object of the present invention is to provide a system to view content using a display device that displays the content and a terminal device such as a mobile phone in link with each other.

### Solution to Problem

A terminal device according to one exemplary aspect of the present invention is a terminal device capable of communication with a display device that displays content containing audio and video, which includes a transmitting and receiving means for transmitting and receiving information to and from the display device, an input means for accepting setting information indicating an element to be output in conjunction with display of the content, a storage area for storing the setting information accepted by the input means, a link control means for making control to transmit the setting information to the display device and then receive control data for outputting the element indicated by the setting information in conjunction with display of the content from the display device, and an output control means for outputting the element in conjunction with display of the content by using the control data.

A display device according to one exemplary aspect of the present invention is a display device that displays content containing audio and video, which includes a transmitting and receiving means for transmitting and receiving information to and from a given terminal device, a storage area for storing setting information received from the terminal device and indicating an element to be output from the terminal device in conjunction with display of the content, and a link control means for generating control data for outputting the element indicated by the setting information in conjunction with display of the content and transmitting the control data to the terminal device through the transmitting and receiving means.

A terminal device link system according to one exemplary aspect of the present invention is a terminal device link system to view content containing audio and video using a display device that displays the content and a terminal device in link with each other, in which the terminal device includes a transmitting and receiving means for transmitting and receiving information to and from the display device, an input means for accepting setting information indicating an element to be output in conjunction with display of the content, a storage area for storing the setting information accepted by the input means, a link control means for making control to transmit the setting information to the display device and then receive control data for outputting the element indicated by the setting information in conjunction with display of the content from the display device, and an output control means for outputting the element in conjunction with display of the content by using the control data, and the display device includes a transmitting and receiving means for transmitting and receiving information to and from the terminal device, a storage area for storing the setting information received from the terminal device, and a link control means for generating the control data by using the setting information and transmitting the control data to the terminal device through the transmitting and receiving means.

A terminal device link method according to one exemplary aspect of the present invention is a terminal device link method for a terminal device to be linked with a display device that displays content containing audio and video, which includes accepting setting information indicating an element to be output in conjunction with display of the content, storing the accepted setting information into a storage area, transmitting the setting information to the display device, receiving control data for outputting the element indicated by the setting information in conjunction with display of the content from the display device, and outputting the element in conjunction with display of the content by using the control data.

A terminal device link method according to one exemplary aspect of the present invention is a terminal device link method for a display device that displays content containing audio and video to be linked with a given terminal device, which includes receiving setting information indicating an element to be output from the terminal device in conjunction with display of the content from the terminal device, storing the received setting information into a storage area, generating control data for outputting the element indicated by the setting information in conjunction with display of the content, and transmitting the generated control data to the terminal device.

A terminal device link method according to one exemplary aspect of the present invention is a terminal device link method to view content containing audio and video using a display device that displays the content and a terminal device in link with each other, which includes, in the terminal device, accepting setting information indicating an element to be output in conjunction with display of the content, storing the accepted setting information into a storage area, transmitting the setting information to the display device, receiving control data for outputting the element indicated by the setting information in conjunction with display of the content from the display device, and outputting the element in conjunction with display of the content by using the control data, and, in the display device, receiving the setting information from the terminal device, storing the setting information into a storage area, generating the control data by using the setting information, and transmitting the generated control data to the terminal device.

A program according to one exemplary aspect of the present invention is a program causing a terminal device to operate in link with a display device that displays content containing audio and video, the program causing a computer to execute processing of accepting setting information indicating an element to be output in conjunction with display of the content, processing of storing the accepted setting information into a storage area, processing of transmitting the setting information to the display device, processing of receiving control data for outputting the element indicated by the setting information in conjunction with display of the content from the display device, and processing of outputting the element in conjunction with display of the content by using the control data.

A terminal device link method according to one exemplary aspect of the present invention is a program causing a display device that displays content containing audio and video to operate in link with a given terminal device, the program causing a computer to execute processing of receiving setting information indicating an element to be output from the terminal device in conjunction with display of the content from the terminal device, processing of storing the received setting information into a storage area, processing of generating control data for outputting the element indicated by the setting information in conjunction with display of the content, and processing of transmitting the generated control data to the terminal device.

### Advantageous Effects of Invention

According to the exemplary aspect of the present invention, it is possible to provide a system to view content using a display device that displays the content and a terminal device such as a mobile phone in link with each other.

### Brief Description of Drawings

Fig. 1 is a block diagram showing a substantial part of a configuration example of a display device according to a first exemplary embodiment of the present invention.
Fig. 2 is a block diagram showing a substantial part of a configuration example of a terminal device according to the first exemplary embodiment of the present invention.
Fig. 3 is a flowchart showing an operation example of the display device (television) according to the first exemplary embodiment.
Fig. 4 is a flowchart showing an operation example of the terminal device (mobile phone) according to the first exemplary embodiment.
Fig. 5 is a diagram illustrating a flow of information when the display device operates.
Fig. 6 is a diagram illustrating an operation when the terminal device receives setting information from a user.
Fig. 7 is a diagram showing one example of a display screen when a user enters setting information.
Fig. 8 is a diagram showing one example of setting information.
Fig. 9 is a diagram illustrating an operation when the terminal device outputs elements using control data.
Fig. 10 is a diagram showing a specific example of link vibration data contained in control data.
Fig. 11 is a diagram showing a specific example of link lighting data contained in control data.
Fig. 12 is a diagram showing a specific example of outputting subtitles and a different type of audio from the terminal device.
Fig. 13 is a diagram showing a specific example of outputting different types of audio from the display device and the terminal device.
Fig. 14 is a diagram showing a specific example of outputting audio from the display device and outputting subtitles from the terminal device.
Fig. 15 is a diagram showing a specific example of vibrating the terminal device.
Fig. 16 is a diagram showing a specific example of lighting the terminal device.

### Description of Embodiments

Exemplary embodiments of the invention will be described hereinafter with reference to the drawings. The following description and the attached drawings are appropriately shortened and simplified to clarify the explanation. In the drawings, the identical reference symbols denote identical structural elements and the redundant explanation thereof is omitted.

The present invention provides a system (terminal device link system) where a display device for viewing content information and a terminal device are linked together. The terminal device link system according to the exemplary embodiment of the present invention is applicable to a system composed of a display device (for example, a television) that displays content containing audio and video and a terminal device that has a communication function such as a portable terminal. First, the overview of the functions of each device is described hereinbelow.

The terminal device includes the following functions:
a function of transmitting and receiving information to and from the display device;
an input function of accepting setting information;
a function of storing the setting information accepted by the input function;
a function of transmitting the setting information to the display device;
a function of receiving control data from the display device in accordance with the transmitted setting information; and
a function of outputting set elements in accordance with the control data.

The display device includes the following functions:
a function of transmitting and receiving information to and from the terminal device;
a function of receiving setting information from the terminal device and storing the setting information into a storage area; and
a function of generating control data using the setting information and transmitting the control data to the terminal device.

The "setting information" is information that indicates elements to be output in conjunction with display of content.

The "elements" output from the terminal device include which type (Japanese, English etc.) of audio to be output or no audio, which type of subtitles to be displayed or no subtitles, whether or not to vibrate the own device, whether or not to light the own device and the like, for example. The information related to setting of each element is referred to as audio information, subtitle information, vibration information and lighting information, for example. The setting information contains at least one of those information. Further, the elements are not limited thereto as long as the terminal device can output it in conjunction with display of content.

The "control data" (which is also referred to as "link control data ") is data for outputting the element indicated by the setting information in conjunction with display of content. When indicating the control data of each individual element, the control data is referred to as link audio data, link subtitle data, link vibration data or link lighting data. The control data contains at least one of those information.

In the following exemplary embodiment, the case of using a television as the display device and using a mobile phone as the terminal device is described as one example. A link system between the television and the mobile phone in which the mobile phone plays back the television audio or displays subtitles, for example, is provided.

### First exemplary embodiment

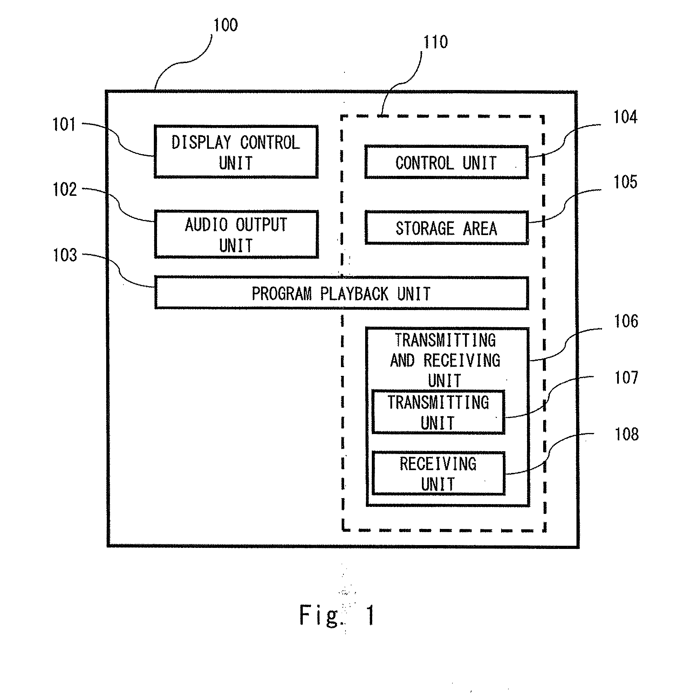

Fig. 1 is a block diagram showing a substantial part of a configuration example of a display device according to a first exemplary embodiment of the present invention. In this example, a substantial part of components of a television 100 that serves as the display device (video and audio output device) is shown. A display control unit 101, an audio output unit 102, a program playback unit 103, a control unit (link control unit) 104, a storage area 105 and a transmitting and receiving unit 106 are shown in this example.

The display control unit 101 performs control to display video information on a screen.

The audio output unit 102 performs control to output audio information.

The program playback unit 103 is a part that controls playback of content containing a broadcasted program and the like and provides content information to be played back to the display control unit 101, the audio output unit 102 and the control unit 104.

The control unit 104 performs various processing and control.

The storage area 105 is an area that stores information and stores setting information (which is described later) received from a mobile phone, for example. The storage area 105 is a readable and writable RAM (random access memory), for example.

The transmitting and receiving unit 106 transmits and receives data to and from the mobile phone. A communication method is wireless communication, such as Bluetooth (registered trademark) or Wi-Fi (registered trademark), that is available in the mobile phone, and another communication method may be used if it is supported in the television. The transmitting and receiving unit 106 includes a transmitting unit 107 and a receiving unit 108.

Although the television used in this exemplary embodiment has the above-described configuration, it may be implemented by adding a mobile phone link system unit 110 to a common television. The mobile phone link system unit 110 is a function implemented by a part of the function of the program playback unit 103 and the functions included in the control unit 104, the storage area 105 and the transmitting and receiving unit 106.

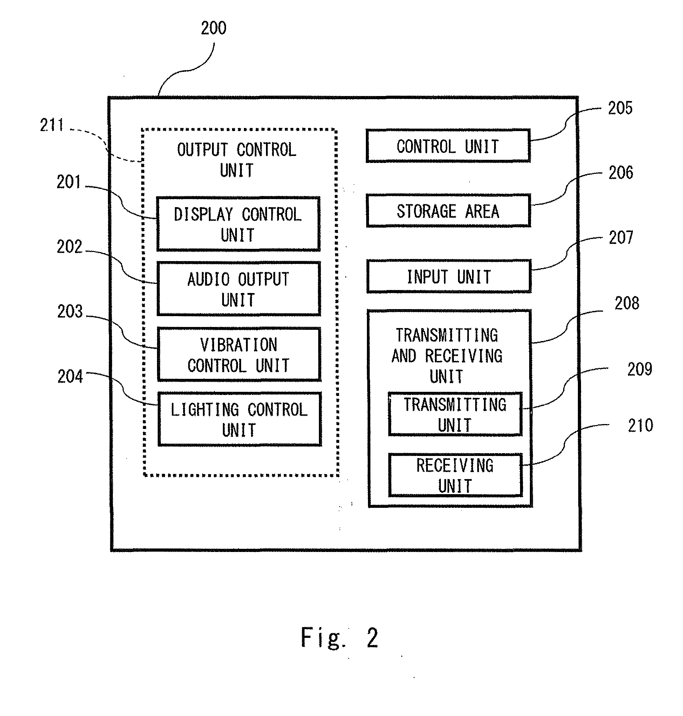

Fig. 2 is a block diagram showing a substantial part of a configuration example of a terminal device according to the first exemplary embodiment of the present invention. In Fig. 2, a substantial part of components of a mobile phone 200 that serves as the terminal device and implements the functions related to the present invention is shown, and components such as a communication function of the mobile phone are not shown. A display control unit 201, an audio output unit 202, a vibration control unit 203, a lighting control unit 204, a control unit (link control unit) 205, a storage area 206, an input unit 207 and a transmitting and receiving unit 208 are shown in this example.

The display control unit 201 performs control to display video information on a screen.

The audio output unit 202 performs control to output audio.

The vibration control unit 203 performs control of vibration such as mobile phone vibration.

The lighting control unit 204 performs control of lighting such as LED (light-emitting diode) or organic EL (electroluminescence) mounted on the mobile phone.

The control unit 205 performs various processing and control.

The storage area 206 is an area that stores information and stores setting information input by the input unit 207 or control data received from the television, for example. The storage area 206 is a RAM, for example.

The input unit 207 is an input circuit that accepts input from a user through a key or a touch panel.

The transmitting and receiving unit 208 is a part that transmits and receives data to and from the television 100. A communication method is wireless communication, such as Bluetooth (registered trademark) or Wi-Fi (registered trademark), that is available in the mobile phone, and another communication method may be used if it is supported in the television. The transmitting and receiving unit 208 includes a transmitting unit 209 and a receiving unit 210.

Note that, in the mobile phone 200, the display control unit 201, the audio output unit 202, the vibration control unit 203 and the lighting control unit 204 that output control data in conjunction with display of content are sometimes referred to as an output control unit 2211.

The operation of the terminal device link system is described hereinafter with reference to the drawings.

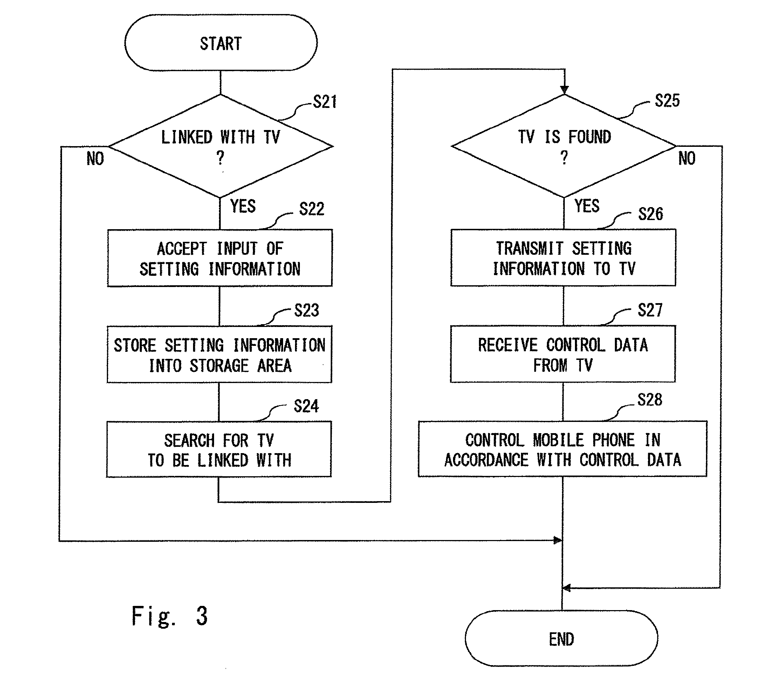

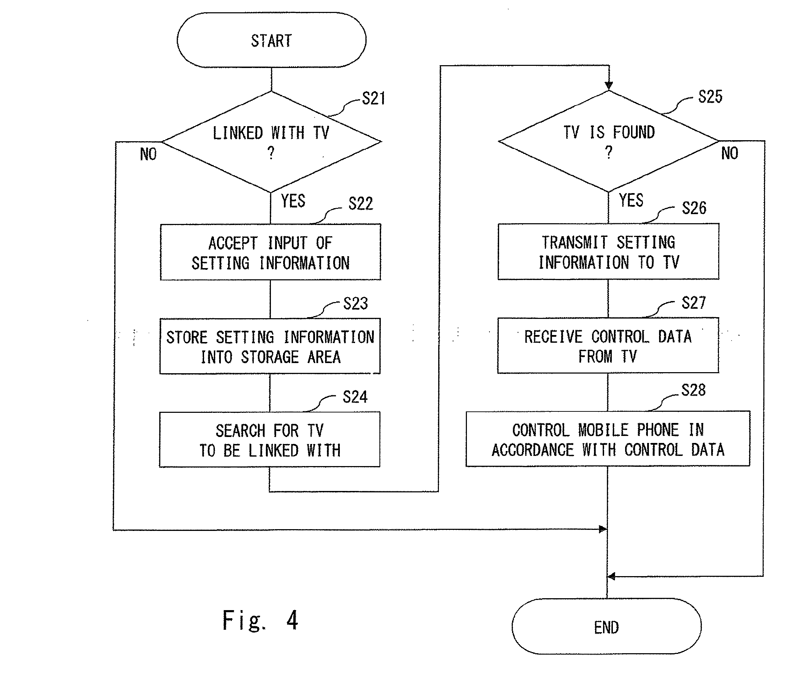

Fig. 3 is a flowchart showing an operation example of the television according to the first exemplary embodiment. Fig. 4 is a flowchart showing an operation example of the mobile phone according to the first exemplary embodiment.

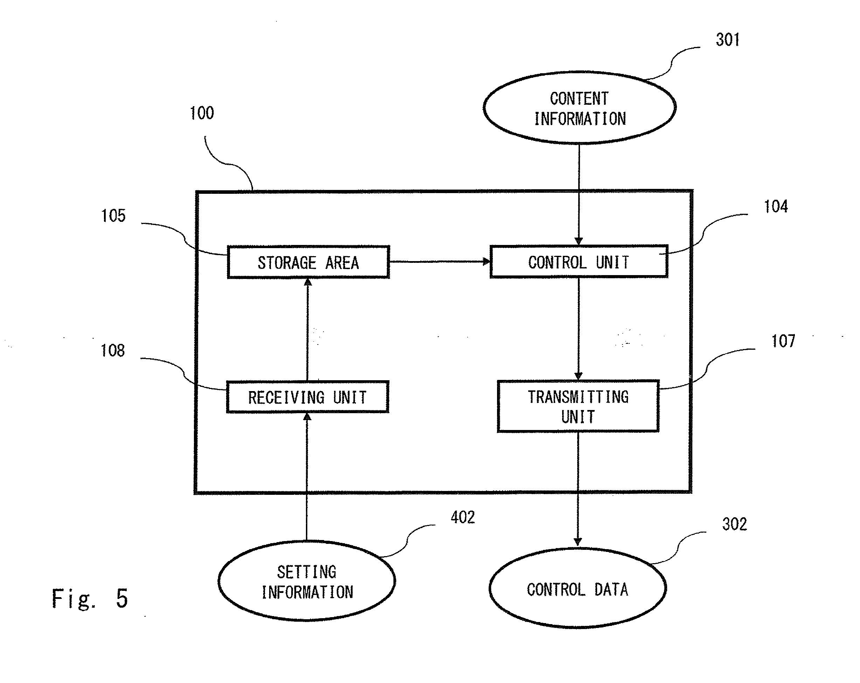

First, the operation of the television 100 is described. Fig. 5 is a diagram illustrating a flow of information when the television operates. In the case of linking the television 100 and the mobile phone 2 (Step S11:Y), the control unit 104 searches for the mobile phone 200 to be linked with the television 100 by using the transmitting and receiving unit 106 (S12). To see how to search for the mobile phone 200 to be linked with, it is confirmed that they are linkable by exchanging predetermined initial information between the transmitting and receiving units of the both devices. When the mobile phone 200 is found (Step S13:Y), setting information 402 is received from the mobile phone 200 by the receiving unit 108 (Step S14). The received setting information 402 is stored into the storage area 105 (Step S15). The control unit 104 generates control data 302 by using the setting information and the content information (Step S16). The control data 302 is described later. The control unit 104 transmits the generated control data to the mobile phone 200 through the transmitting unit 107 (Step S17). After that, the television 100 plays back the content based on content information 301 (Step S18).

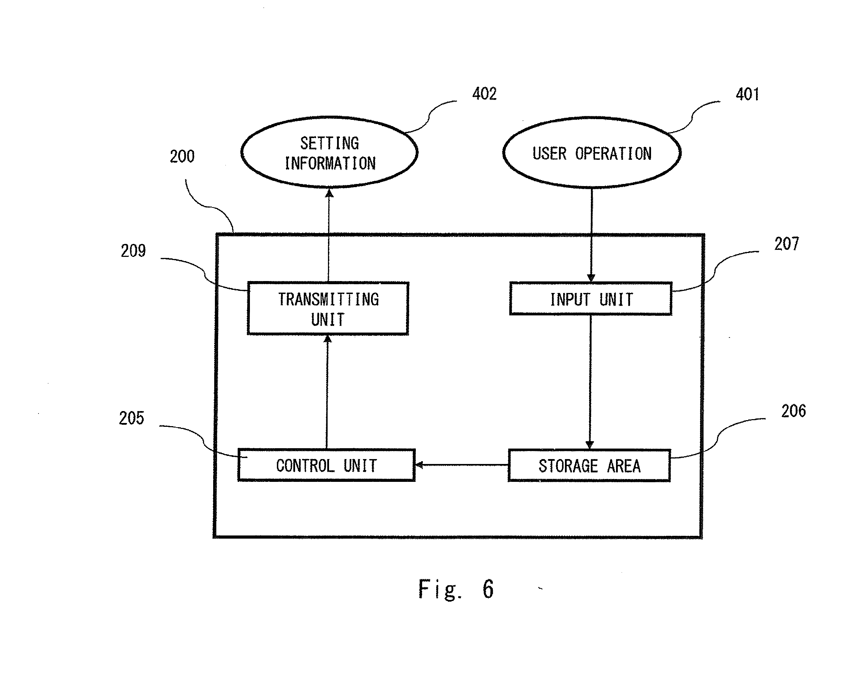

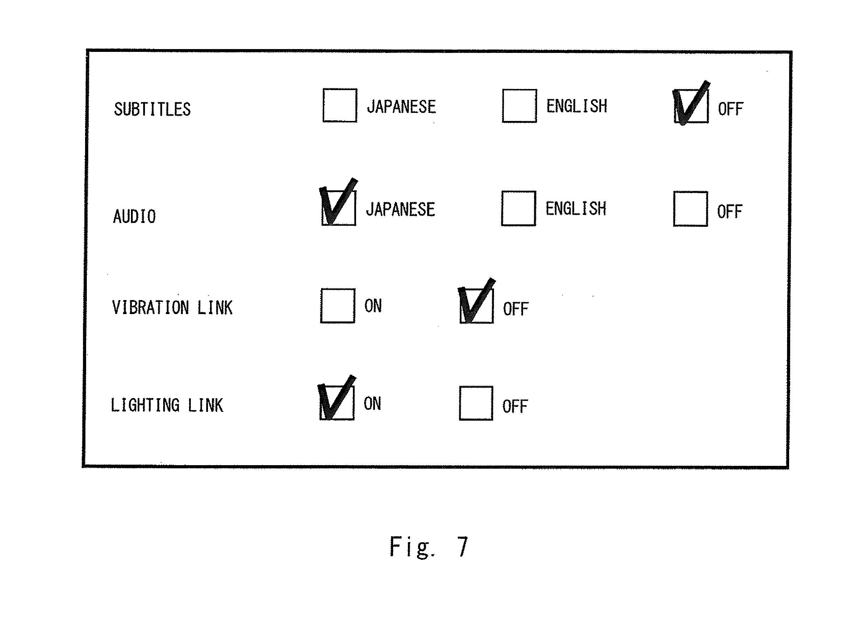

The operation of the mobile phone 200 is described hereinafter. Fig. 6 is a diagram illustrating a flow of information when the mobile phone accepts setting information by a user operation. In the case of linking the mobile phone 200 with the television 100 (Step S21: Y), the input unit 207 accepts information (setting information) about how to link the mobile phone 200 and the television 100 by a user operation 401 (Step S22) and stores the input setting information into the storage area 206 (Step S23). The display screen of the mobile phone 200 in this step is as shown in Fig. 7, for example, and setting is made by key entry or touch panel entry.

After that, the control unit 205 searches for the television 100 that is to be linked with the mobile phone 200 by using the transmitting and receiving unit 208 (Step S24). When the television 100 is found (Step S25: Y), the control unit 205 transmits the setting information 402 stored in the storage area 206 to the television 100 through the transmitting unit 209.

After the setting information 402 is transmitted to the television 100, the control data 302 is generated and transmitted by the television 100, and the receiving unit 210 of the mobile phone 200 receives it (Step S27).

The received control data 302 is stored into the storage area 206, and the control unit 205 controls the display control unit 201, the audio output unit 202, the vibration control unit 203 and the lighting control unit 204 in accordance with the content that is displayed on the television 100 by using the stored control data 302 (Step S28).

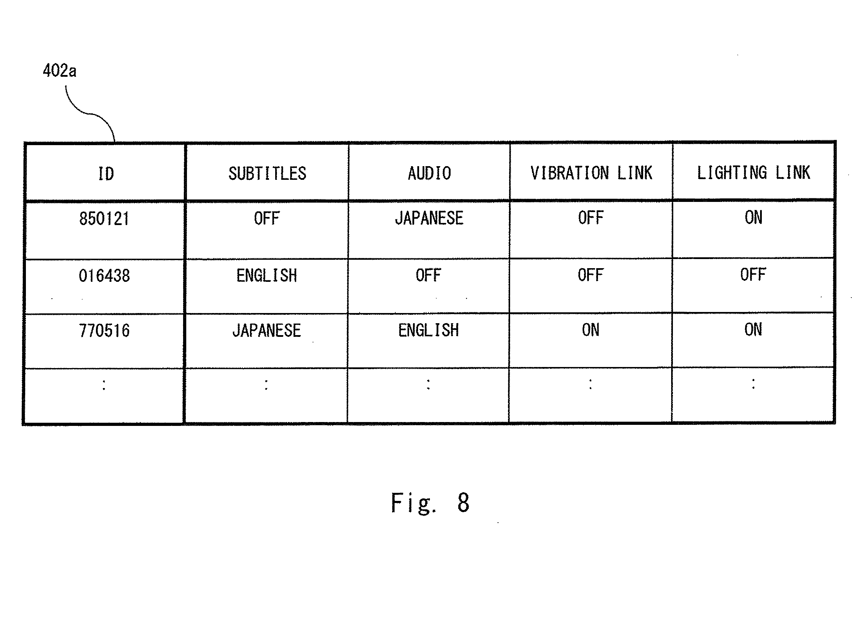

The setting information 402 that is transmitted from the mobile phone 200 is stored into the storage area 105 of the television 100. Fig. 8 is a diagram showing one example of setting information 402a stored in the storage area 105. In the setting information 402a, for each mobile phone 200 to be linked with, information about subtitles, audio, vibration and lighting is stored in association with ID that identifies the mobile phone 200. In Fig. 8, as the audio information, a type of audio (Japanese, English etc.) to be output or no audio (OFF) is indicated. As the subtitle information, a type of subtitles to be displayed or no subtitles is indicated. As the vibration information, whether or not to vibrate the own device (ON/OFF) is indicated. As the lighting information, whether or not to light the own device (ON/OFF) is indicated.

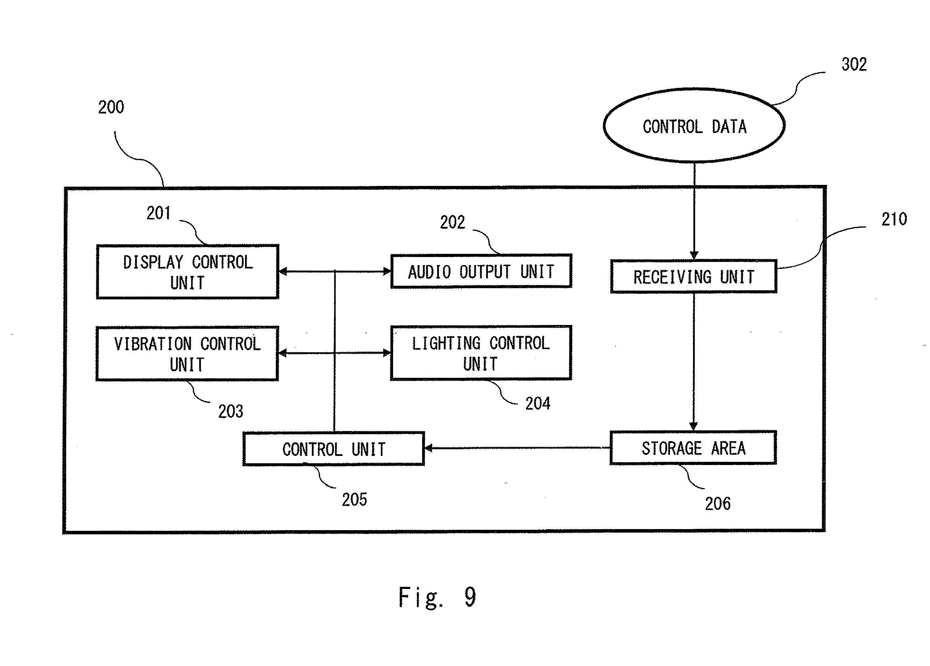

Fig. 9 shows a flow of information when the mobile phone 200 outputs the elements of audio, subtitles, vibration and lighting in accordance with the control data 302. The control data 302 received from the television 100 is stored into the storage area 206. The control unit 205 analyzes the stored control data 302 and passes the control data 302 to the corresponding output control unit. The display control unit 201 outputs link subtitle data. The audio output unit 202 outputs link audio data. The vibration control unit 203 vibrates the device in accordance with link vibration data. The lighting control unit 204 lights the LED in accordance with link vibration data.

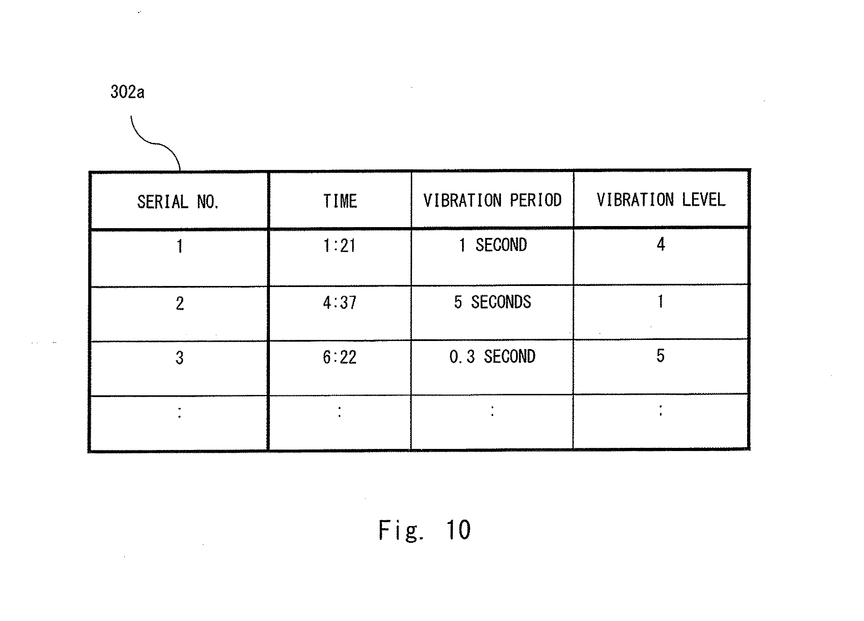

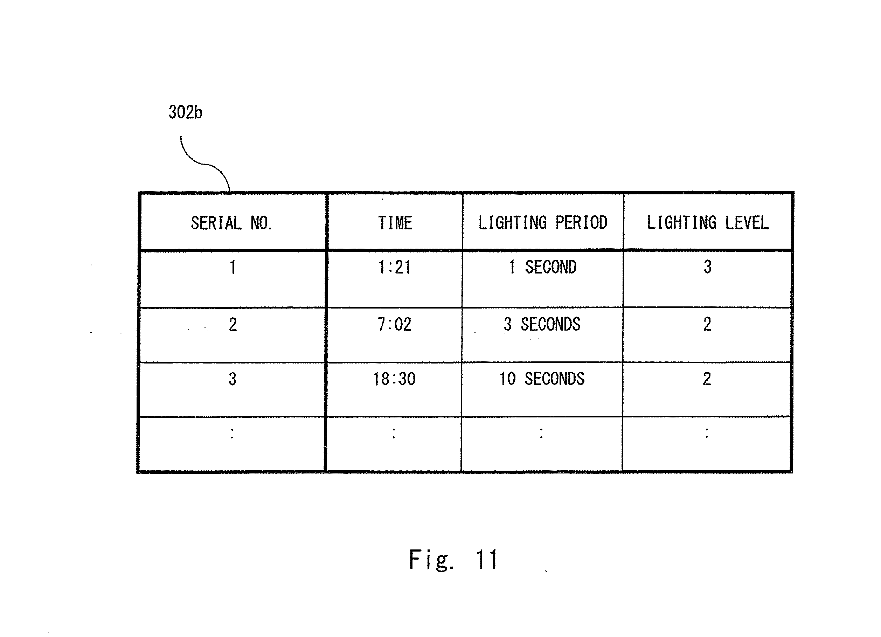

The control data 302 that is generated in the television 100 contains subtitle and audio data and data indicating timing of vibration and timing of lighting. The link subtitle data contained in the control data 302 is subtitle data to be displayed by the mobile phone 200 in conjunction with display of the content, and the link audio data is audio data to be output by the mobile phone 200 in conjunction with display of the content. Further, the control data for vibration and lighting are stored in the format as shown in Figs. 10 and 11, respectively. Fig. 10 shows one example of link vibration data 302a contained in the control data 302, and Fig. 11 shows one example of link lighting data 302b contained in the control data 302. The control data 302 is output in synchronization with the content to be displayed on the television 100, and thereby each element is output corresponding to the displayed content. For example, the timing to start display of the content is notified from the television to the mobile phone, so that synchronization is achieved between the display of the content and the output of the element of the control data. Please add another method or the like, if any.

Those data may be automatically generated from the content information or manually added. In the case of generating the data from the content information, the data of vibration or lighting can be added by using the fact that there is a large change in luminance in a thunder scene, for example.

Although the case where the television 100 and the mobile phone 200 are linked in one-to-one correspondence is described in the above example, a plurality of mobile phones 200 may be linked with one television 100.

By doing such setting of a link, the control data for audio, subtitles, vibration and LED lighting that are required by the mobile phone 200 are transmitted from the television 100 by wireless communication when the program is played back. The mobile phone 200 receives the control data and performs processing using the received control data.

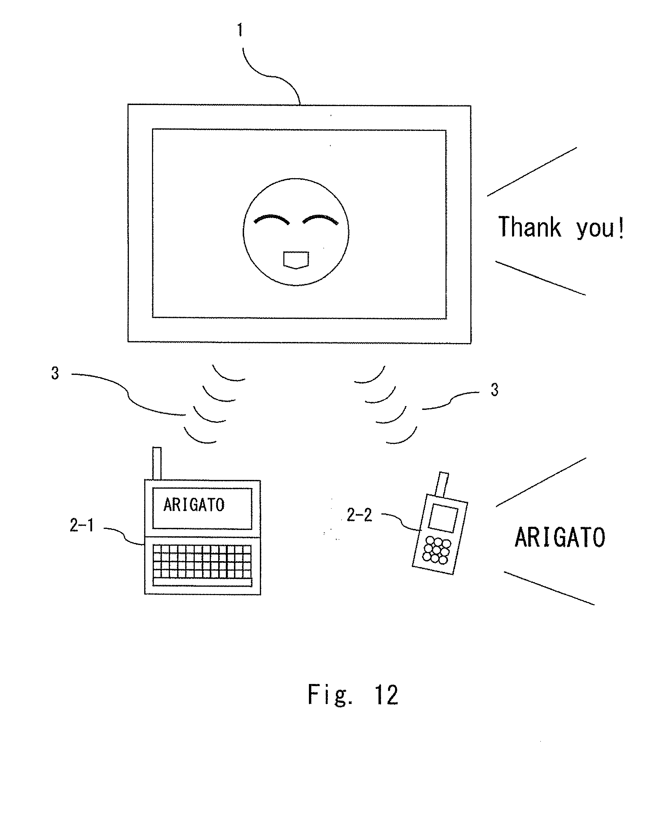

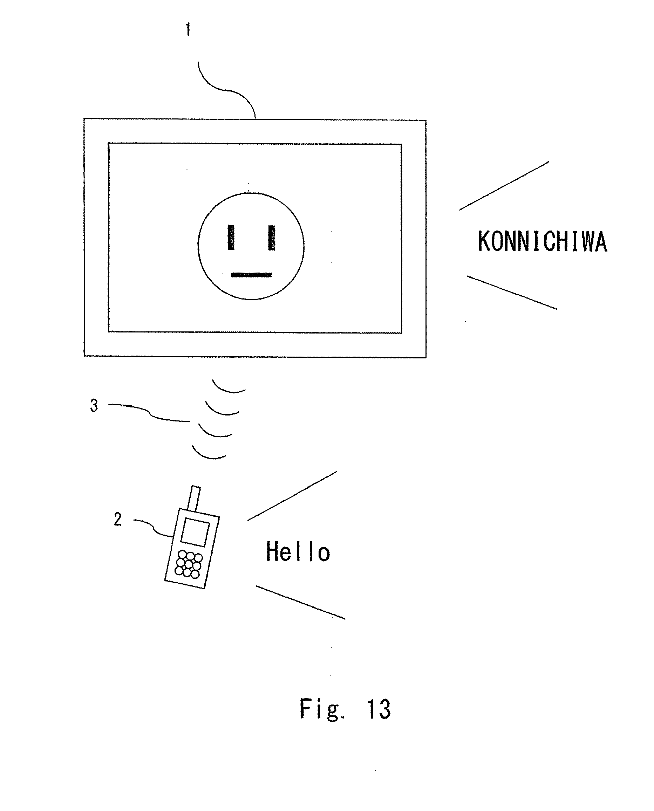

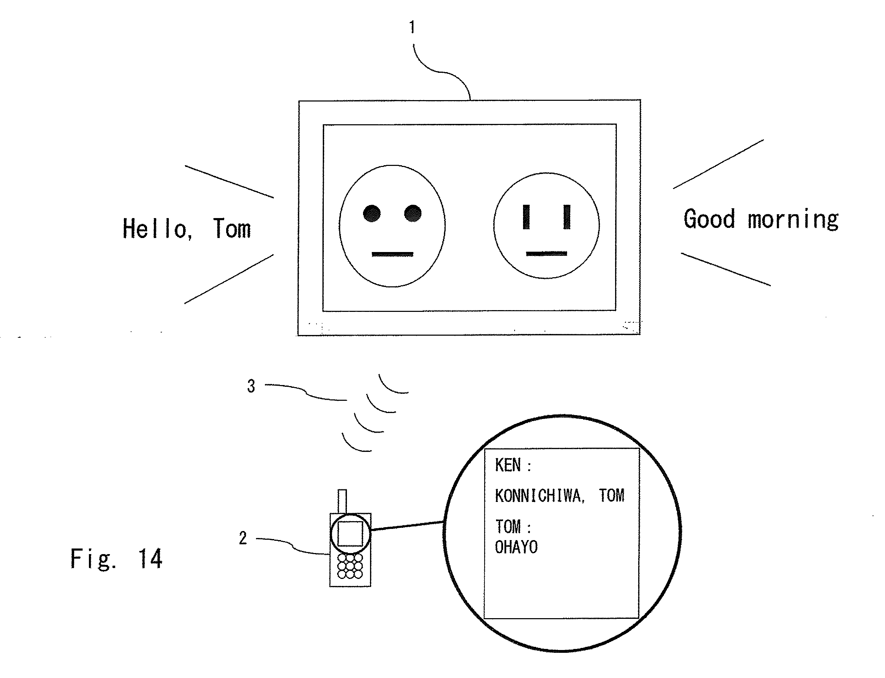

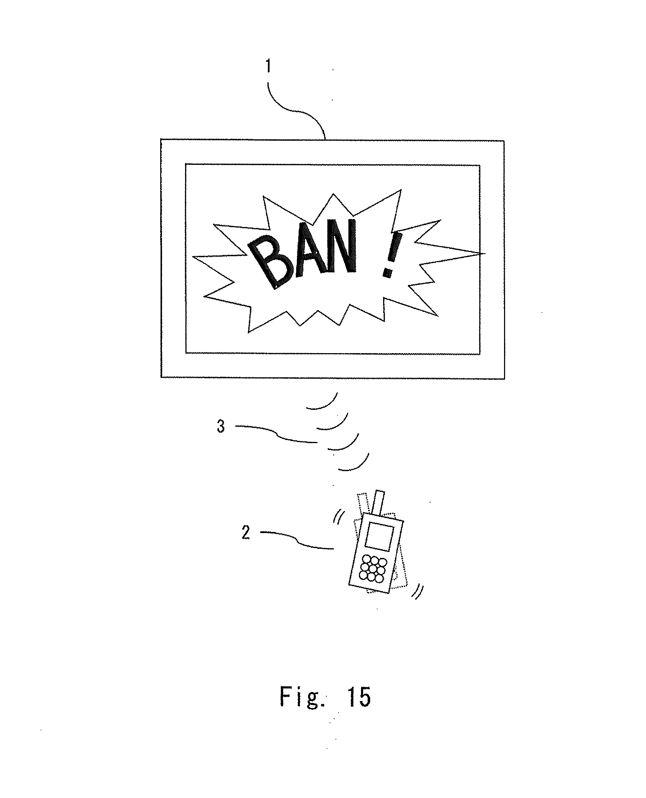

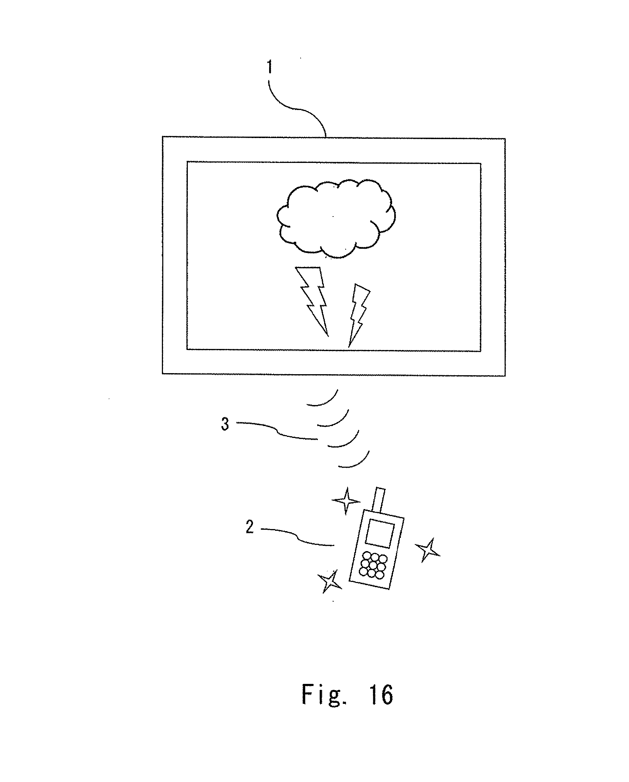

Specific examples of viewing content when the terminal device link system is applied are shown in Figs. 12 to 16. Fig. 12 shows a specific example of outputting subtitles and a different type of audio from the terminal device. Fig. 13 shows a specific example of outputting different types of audio from the display device and the terminal device. Fig. 14 shows a specific example of outputting audio from the display device and outputting subtitles from the terminal device. Fig. 15 shows a specific example of vibrating the terminal device. Fig. 16 shows a specific example of lighting the terminal device.

In Fig. 12, when viewing a program, it is possible to output a video on a screen and output English audio from a speaker in a television 1, output Japanese subtitles on a screen in a mobile phone 2-1, and output Japanese audio from a speaker (or earphones etc.) in another mobile phone 202, so that users can enjoy the program in their desired ways. The television 1 and the mobile phones 2-1 and 2-2 transmit and receive information by wireless communication 3. In another example, as shown in Fig. 13, it is possible to output Japanese audio from the television 1 and output English audio from the mobile phone 2. Further, as shown in Fig. 14, it is possible to output English audio from the television 1 and display Japanese subtitles on the mobile phone 2. Furthermore, it is possible to vibrate the mobile phone 2 (for example, using a vibration function) in conjunction with the state of the television 1 as shown in Fig. 15, or light the LED of the mobile phone 2 in conjunction with the state of the television 1 as shown in Fig. 16.

As described above, according to this exemplary embodiment, it is possible to view content by linking the display device that displays content and the terminal device. This allows users to view content information such as a movie in the manner desired by the respective users. For example, when several persons view content on the display device, they can enjoy the content in their desired ways by using a mobile phone owned by each of them.

### Second exemplary embodiment

In the first exemplary embodiment, the case where the mobile phone is used as the terminal device is described; however, a portable game machine with a wireless function may be used in place of the mobile phone.

Further, when listening to audio only, a music player such as DAP (Digital Audio Player) with a wireless function may be used instead of the mobile phone.

Furthermore, the present invention may be applied to 3D programs. For example, when several persons watch a 3D program on a television, a certain person does not want to view a 3D video because the person feels dizzy with 3D in some cases. In such a case, the person can view a 2D video using the mobile phone. Further, when a television does not support 3D videos, it is possible to view the 3D video using a mobile phone that supports 3D videos by transmitting video data as the control data to the mobile phone.

The display device is not limited to the television, and it may be any device as long as it can display (play back) content.

### Other exemplary embodiments

In the above-described exemplary embodiments, a device that is a mobile phone or the like having a display mechanism, an audio output mechanism, a vibration mechanism and a lighting mechanism is used as an example of the terminal device; however, the present invention may be applied to the terminal device having some of those mechanisms. Further, the present invention may be applied also to the case where some of those functions are used. For example, the present invention may be applied to the case where the vibration mechanism is not used.

Further, although the case where the display device and the terminal device communicate with each other by wireless communication is described in the above-described exemplary embodiments, the present invention may be applied to the case of wired communication.

Furthermore, each processing of the terminal device link method described in the above exemplary embodiments can be implemented by a program that causes a computer to execute each means. The program is loaded to a memory of a computer and executed under control of a CPU (Central Processing Unit).

The program used in the terminal device at least causes a computer to execute the following processing: processing of accepting setting information, which is information indicating elements (at least one of output of audio, display of subtitles, vibration of the own device, lighting of the own device) to be output in conjunction with display of content; processing of storing the accepted setting information into the storage area; processing of transmitting the setting information to the display device; processing of receiving control information from the display device after transmitting the setting information to the display device; and processing of outputting the elements in accordance with the control data in conjunction with display of content.

The program used in the display device at least causes a computer to execute the following processing: processing of receiving setting information from the terminal device; processing of storing the setting information into the storage area; processing of generating control data based on the stored setting information; and processing of transmitting the generated control data to the terminal device.

In the above-described example, the program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R , CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

The whole or part of the exemplary embodiments disclosed above can be described as, but not limited to, the following supplementary notes.

### Supplementary note 1:

A terminal device capable of communication with a display device that displays content containing audio and video, comprising:
a transmitting and receiving unit for transmitting and receiving information to and from the display device;
an input unit for accepting setting information indicating an element to be output in conjunction with display of the content;
a storage area for storing the setting information accepted by the input unit;
a link control unit for making control to transmit the setting information to the display device and then receive control data for outputting the element indicated by the setting information in conjunction with display of the content from the display device; and
an output control unit for outputting the element in conjunction with display of the content by using the control data.

### Supplementary note 2:

The terminal device according to Supplementary note 1, wherein
the output control unit includes an audio output unit for outputting the audio,
the setting information contains audio information indicating which type of audio among different types of audio to be output, and
the control data contains link audio data to be output from the audio output unit in conjunction with display of the content.

### Supplementary note 3:

The terminal device according to Supplementary note 2, wherein
the output control unit further includes a display control unit for displaying the video,
the setting information contains subtitle information indicating whether or not to display subtitles, and
the control data contains link subtitle data to be displayed on the display control unit in conjunction with display of the content.

### Supplementary note 4:

The terminal device according to Supplementary note 2 or 3, wherein
the output control unit further includes a vibration control unit for vibrating the terminal device,
the setting information contains vibration information indicating vibration of the terminal device, and
the control data contains link vibration data indicating timing to vibrate the terminal device in conjunction with display of the content.

### Supplementary note 5:

The terminal device according to any one of Supplementary notes 2 to 4, wherein
the output control unit further includes a lighting control unit for lighting the terminal device,
the setting information contains lighting information indicating lighting of the terminal device, and
the control data contains link lighting data indicating timing to light the terminal device in conjunction with display of the content.

### Supplementary note 6:

A display device that displays content containing audio and video, comprising:
a transmitting and receiving unit for transmitting and receiving information to and from a given terminal device;
a storage area for storing setting information received from the terminal device and indicating an element to be output from the terminal device in conjunction with display of the content; and
a link control unit for generating control data for outputting the element indicated by the setting information in conjunction with display of the content and transmitting the control data to the terminal device through the transmitting and receiving unit.

### Supplementary note 7:

The display device according to Supplementary note 6, wherein
the setting information contains audio information indicating which type of audio among different types of audio to be output, and
the link control unit generates control data containing link audio data to be output from the terminal device in conjunction with display of the content.

### Supplementary note 8:

The display device according to Supplementary note 6 or 7, wherein
the setting information contains subtitle information indicating whether or not to display subtitles, and
the link control unit generates control data containing link subtitle data to be displayed on the terminal device in conjunction with display of the content.

### Supplementary note 9:

The display device according to any one of Supplementary notes 6 to 8, wherein
the setting information contains vibration information indicating vibration of the terminal device, and
the link control unit generates control data containing link vibration data indicating timing when the terminal device vibrates in conjunction with display of the content.

### Supplementary note 10:

The display device according to any one of Supplementary notes 6 to 9, wherein
the setting information contains lighting information indicating lighting of the terminal device, and
the link control unit generates control data containing link lighting data indicating timing when the terminal device lights the screen in conjunction with display of the content.

### Supplementary note 11:

A terminal device link system to view content containing audio and video using a display device that displays the content and a terminal device in link with each other,
the terminal device comprising:
a transmitting and receiving unit for transmitting and receiving information to and from the display device;
an input unit for accepting setting information indicating an element to be output in conjunction with display of the content;
a storage area for storing the setting information accepted by the input unit;
a link control unit for making control to transmit the setting information to the display device and then receive control data for outputting the element indicated by the setting information in conjunction with display of the content from the display device; and
an output control unit for outputting the element in conjunction with display of the content by using the control data, and
the display device comprising:
a transmitting and receiving unit for transmitting and receiving information to and from the terminal device;
a storage area for storing the setting information received from the terminal device; and
a link control unit for generating the control data by using the setting information and transmitting the control data to the terminal device through the transmitting and receiving unit.

### Supplementary note 12:

A terminal device link method for a terminal device to be linked with a display device that displays content containing audio and video, comprising:
accepting setting information indicating an element to be output in conjunction with display of the content;
storing the accepted setting information into a storage area;
transmitting the setting information to the display device;
receiving control data for outputting the element indicated by the setting information in conjunction with display of the content from the display device; and
outputting the element in conjunction with display of the content by using the control data.

### Supplementary note 13:

A terminal device link method for a display device that displays content containing audio and video to be linked with a given terminal device, comprising:
receiving setting information indicating an element to be output from the terminal device in conjunction with display of the content from the terminal device;
storing the received setting information into a storage area;
generating control data for outputting the element indicated by the setting information in conjunction with display of the content; and
transmitting the generated control data to the terminal device.

### Supplementary note 14:

A terminal device link method to view content containing audio and video using a display device that displays the content and a terminal device in link with each other, comprising:
in the terminal device,
accepting setting information indicating an element to be output in conjunction with display of the content;
storing the accepted setting information into a storage area;
transmitting the setting information to the display device;
receiving control data for outputting the element indicated by the setting information in conjunction with display of the content from the display device; and
outputting the element in conjunction with display of the content by using the control data, and
in the display device,
receiving the setting information from the terminal device;
storing the setting information into a storage area;
generating the control data by using the setting information; and
transmitting the generated control data to the terminal device.

### Supplementary note 15:

A program causing a terminal device to operate in link with a display device that displays content containing audio and video, the program causing a computer to execute:
processing of accepting setting information indicating an element to be output in conjunction with display of the content;
processing of storing the accepted setting information into a storage area;
processing of transmitting the setting information to the display device;
processing of receiving control data for outputting the element indicated by the setting information in conjunction with display of the content from the display device; and
processing of outputting the element in conjunction with display of the content by using the control data.

### Supplementary note 16:

A program causing a display device that displays content containing audio and video to operate in link with a given terminal device, the program causing a computer to execute:
processing of receiving setting information indicating an element to be output from the terminal device in conjunction with display of the content from the terminal device;
processing of storing the received setting information into a storage area;
processing of generating control data for outputting the element indicated by the setting information in conjunction with display of the content; and
processing of transmitting the generated control data to the terminal device.

### Supplementary note 17:

A non-transitory computer-readable medium storing a program causing a terminal device to operate in link with a display device that displays content containing audio and video, the program causing a computer to execute:
processing of accepting setting information indicating an element to be output in conjunction with display of the content;
processing of storing the accepted setting information into a storage area;
processing of transmitting the setting information to the display device;
processing of receiving control data for outputting the element indicated by the setting information in conjunction with display of the content from the display device; and
processing of outputting the element in conjunction with display of the content by using the control data.

### Supplementary note 18:

A non-transitory computer-readable medium storing a program causing a display device that displays content containing audio and video to operate in link with a given terminal device, the program causing a computer to execute:
processing of receiving setting information indicating an element to be output from the terminal device in conjunction with display of the content from the terminal device;
processing of storing the received setting information into a storage area;
processing of generating control data for outputting the element indicated by the setting information in conjunction with display of the content; and
processing of transmitting the generated control data to the terminal device.

This application is based upon and claims the benefit of priority from Japanese patent application No. 2011-034907, filed on February 21, 2011, the disclosure of which is incorporated herein in its entirety by reference.

### Reference Signs List

- 1, 100: TELEVISION
- 2, 2-1, 2-2, 200: MOBILE PHONE
- 101,201: DISPLAY CONTROL UNIT
- 102, 202: AUDIO OUTPUT UNIT
- 103: PROGRAM PLAYBACK UNIT
- 104, 205: CONTROL UNIT (LINK CONTROL UNIT)
- 105, 206: STORAGE AREA
- 106, 208: TRANSMITTING AND RECEIVING UNIT
- 107, 209: TRANSMITTING UNIT
- 108, 210: RECEIVING UNIT
- 110: MOBILE PHONE LINK SYSTEM UNIT
- 203: VIBRATION CONTROL UNIT
- 204: LIGHTING CONTROL UNIT
- 207: INPUT UNIT

## Claims

1. A terminal device capable of communication with a display device that displays content containing audio and video, comprising:
a transmitting and receiving means for transmitting and receiving information to and from the display device;
an input means for accepting setting information indicating an element to be output in conjunction with display of the content;
a storage area for storing the setting information accepted by the input means;
a link control means for making control to transmit the setting information to the display device and then receive control data for outputting the element indicated by the setting information in conjunction with display of the content from the display device; and
an output control means for outputting the element in conjunction with display of the content by using the control data.

2. The terminal device according to Claim 1, wherein
the output control means includes an audio output means for outputting the audio,
the setting information contains audio information indicating which type of audio among different types of audio to be output, and
the control data contains link audio data to be output from the audio output means in conjunction with display of the content.

3. The terminal device according to Claim 2, wherein
the output control means further includes a display control means for displaying the video,
the setting information contains subtitle information indicating whether or not to display subtitles, and
the control data contains link subtitle data to be displayed on the display control means in conjunction with display of the content.

4. The terminal device according to Claim 2 or 3, wherein
the output control means further includes a vibration control means for vibrating the terminal device,
the setting information contains vibration information indicating vibration of the terminal device, and
the control data contains link vibration data indicating timing to vibrate the terminal device in conjunction with display of the content.

5. The terminal device according to any one of Claims 2 to 4, wherein
the output control means further includes a lighting control means for lighting the terminal device,
the setting information contains lighting information indicating lighting of the terminal device, and
the control data contains link lighting data indicating timing to light the terminal device in conjunction with display of the content.

6. A display device that displays content containing audio and video, comprising:
a transmitting and receiving means for transmitting and receiving information to and from a given terminal device;
a storage area for storing setting information received from the terminal device and indicating an element to be output from the terminal device in conjunction with display of the content; and
a link control means for generating control data for outputting the element indicated by the setting information in conjunction with display of the content and transmitting the control data to the terminal device through the transmitting and receiving means.

7. A terminal device link system to view content containing audio and video using a display device that displays the content and a terminal device in link with each other,
the terminal device comprising:
a transmitting and receiving means for transmitting and receiving information to and from the display device;
an input means for accepting setting information indicating an element to be output in conjunction with display of the content;
a storage area for storing the setting information accepted by the input means;
a link control means for making control to transmit the setting information to the display device and then receive control data for outputting the element indicated by the setting information in conjunction with display of the content from the display device; and
an output control means for outputting the element in conjunction with display of the content by using the control data, and
the display device comprising:
a transmitting and receiving means for transmitting and receiving information to and from the terminal device;
a storage area for storing the setting information received from the terminal device; and
a link control means for generating the control data by using the setting information and transmitting the control data to the terminal device through the transmitting and receiving means.

8. A terminal device link method for a terminal device to be linked with a display device that displays content containing audio and video, comprising:
accepting setting information indicating an element to be output in conjunction with display of the content;
storing the accepted setting information into a storage area;
transmitting the setting information to the display device;
receiving control data for outputting the element indicated by the setting information in conjunction with display of the content from the display device; and
outputting the element in conjunction with display of the content by using the control data.

9. A terminal device link method for a display device that displays content containing audio and video to be linked with a given terminal device, comprising:
receiving setting information indicating an element to be output from the terminal device in conjunction with display of the content from the terminal device;
storing the received setting information into a storage area;
generating control data for outputting the element indicated by the setting information in conjunction with display of the content; and
transmitting the generated control data to the terminal device.

10. A non-transitory computer-readable medium storing a program causing a terminal device to operate in link with a display device that displays content containing audio and video, the program causing a computer to execute:
processing of accepting setting information indicating an element to be output in conjunction with display of the content;
processing of storing the accepted setting information into a storage area;
processing of transmitting the setting information to the display device;
processing of receiving control data for outputting the element indicated by the setting information in conjunction with display of the content from the display device; and
processing of outputting the element in conjunction with display of the content by using the control data.

## Amended claims

### Amended claims under Art. 19.1 PCT

**1.** Currently amended) A terminal device capable of communication with an output device that controls output of content, comprising:
a transmitting and receiving means for transmitting and receiving information to and from the output device;
an input means for accepting setting information indicating an element to be output in conjunction with output of the content;
a storage area for storing the setting information accepted by the input means;
a link control means for making control to transmit the setting information to the output device and then receive control data for outputting the element indicated by the setting information in conjunction with output of the content from the output device; and
an output control means for outputting the element in conjunction with output of the content by using the control data.

**2.** Currently amended) The terminal device according to Claim 1, wherein
the content contains audio,
the output control means includes an audio output means for outputting the audio,
the setting information contains audio information indicating which type of audio among different types of audio to be output, and
the control data contains link audio data to be output from the audio output means in conjunction with output of the content.

**3.** Currently amended) The terminal device according to Claim 2, wherein
the content contains video,
the output control means further includes a display control means for displaying the video,
the setting information contains subtitle information indicating whether or not to display subtitles, and
the control data contains link subtitle data to be displayed on the display control means in conjunction with output of the content.

**4.** Currently amended) The terminal device according to Claim 2 or 3, wherein
the output control means further includes a vibration control means for vibrating the terminal device,
the setting information contains vibration information indicating vibration of the terminal device, and
the control data contains link vibration data indicating timing to vibrate the terminal device in conjunction with output of the content.

**5.** Currently amended) The terminal device according to any one of Claims 2 to 4, wherein
the output control means further includes a lighting control means for lighting the terminal device,
the setting information contains lighting information indicating lighting of the terminal device, and
the control data contains link lighting data indicating timing to light the terminal device in conjunction with output of the content.

**6.** Currently amended) An output device that controls output of content, comprising:
a transmitting and receiving means for transmitting and receiving information to and from a given terminal device;
a storage area for storing setting information received from the terminal device and indicating an element to be output from the terminal device in conjunction with output of the content; and
a link control means for generating control data for outputting the element indicated by the setting information in conjunction with output of the content and transmitting the control data to the terminal device through the transmitting and receiving means.

**7.** Currently amended) A terminal device link system to view content using an output device that controls output of the content and a terminal device in link with each other,
the terminal device comprising:
a transmitting and receiving means for transmitting and receiving information to and from the output device;
an input means for accepting setting information indicating an element to be output in conjunction with output of the content;
a storage area for storing the setting information accepted by the input means;
a link control means for making control to transmit the setting information to the output device and then receive control data for outputting the element indicated by the setting information in conjunction with output of the content from the output device; and
an output control means for outputting the element in conjunction with output of the content by using the control data, and
the output device comprising:
a transmitting and receiving means for transmitting and receiving information to and from the terminal device;
a storage area for storing the setting information received from the terminal device; and
a link control means for generating the control data by using the setting information and transmitting the control data to the terminal device through the transmitting and receiving means.

**8.** Currently amended) A terminal device link method for a terminal device to be linked with an output device that controls output of content, comprising:
accepting setting information indicating an element to be output in conjunction with output of the content;
storing the accepted setting information into a storage area;
transmitting the setting information to the output device;
receiving control data for outputting the element indicated by the setting information in conjunction with output of the content from the output device; and
outputting the element in conjunction with output of the content by using the control data.

**9.** Currently amended) A terminal device link method for an output device that controls output of content to be linked with a given terminal device, comprising:
receiving setting information indicating an element to be output from the terminal device in conjunction with output of the content from the terminal device;
storing the received setting information into a storage area;
generating control data for outputting the element indicated by the setting information in conjunction with output of the content; and
transmitting the generated control data to the terminal device.

**10.** Currently amended) A non-transitory computer-readable medium storing a program causing a terminal device to operate in link with an output device that controls output of content, the program causing a computer to execute:
processing of accepting setting information indicating an element to be output in conjunction with output of the content;
processing of storing the accepted setting information into a storage area;
processing of transmitting the setting information to the output device;
processing of receiving control data for outputting the element indicated by the setting information in conjunction with output of the content from the output device; and
processing of outputting the element in conjunction with output of the content by using the control data.
